# EUROPEAN PATENT APPLICATION

(11) **EP 2 325 789 A1**
(43) Date of publication of application: **25.05.2011**
(21) Application number: 09175234.5
(22) Date of filing: 06.11.2009
(51) Int. Cl.: G06Q 10/00

(54) **Method for exchanging a courier transport message and dispatch system for carrying out the method**

(71) Applicant: Deutsche Post AG, 53113 Bonn (DE)
(72) Inventor: Apthorp, Adrian, RH7 6BH, Lingfield, Surrey (GB)
(74) Representative: Jostarndt, Hans-Dieter

(57) **Abstract**

The present invention provides a method for exchanging a courier transport message by means of an electronic calendar information, comprising, a first electronic calendar information including a participation status, indicating a work item and updating the status of delivery as an electronic calendar information item compliant to a standard; a second electronic calendar information with an additional qualification information as the electronic calendar information item of definition additional to the standard; wherein an additional service is invoked in the case that an electronic standard compliant programme of a customer allows processing standard compliant electronic calendar information.

## Description

The present invention discloses a method for initiating a courier transport with an electronic calendar information. Same day courier services deliver in less than 24 hours and are an integral part of any modern economy. Courier services are distinguished from ordinary mail services by features such as speed, security, tracking, conformation of reception with signature, specialisation and individualisation of services, and committed delivery times, which are optional for most everyday mail services. Due to premium service offer, courier services are usually more expensive than usual mail services, and their use is typically restricted to packages where one or more of these features are considered important enough to warrant the cost.

Courier services are specialised in delivering mail pieces of high priority, importance or sensitivity in a local area. Typically, courier mail pieces are of time and temperature critical goods, such as organs for transplant, key equipment or parts that are necessary for day to day operations. While most companies use courier services certain industries depend on couriers on a daily basis. For example, biomedical laboratories need samples for testing and evaluation, manufacturing industry require parts to keep their plants operating smoothly, financial institutions transfer multiple documents every day between branches and processing centres, law firms must deliver confidential signatured documents on very strict deadlines for court filings and pharmaceutical distributors use couriers to transport medications to hospitals and nursing homes.

Computer systems for organising logistic processes and the exchange of data with major customers are known. The data format of proprietary systems of logistic companies does not allow using standard devices. In general the customer has to provide hardware, server space at the customer side. Further the logistic system software needs maintenance in form of regular updates. If a major customer uses services of several logistic companies the expenses for above mentioned hardware multiplies with each logistic service, the staff of the customer has to get extra training for application of several mailing tools, which is ineffective and costly. Smaller business customers normally do not have an access to the proprietary systems of a logistic company and thus use services based on the telephone, or need to install a proprietary software to be downloaded on customer's workstation and to be connected to the internet. Also this results in maintenance cost of the workstation and training for the customer's staff. Also for the logistic companies the maintenance of the proprietary system rise high cost and to implement changes in the running system are risky and require high efforts for providing the necessary reliability of the system.

When a customer of a logistic service company offering a courier service wishes to send such courier mail pieces, she/he orders a pickup of the mail object at a distinctive customer pickup and/or delivery location, e.g. an office or a hospital. This is normally made in a telephone call to a booking centre, or via said an installed proprietary software of the logistic company hosted on the customer computer or an internet website of the booking centre of the logistic company. For further processing on the proprietary booking system of the logistic company the pickup order is translated into a booking command. The pickup request is registered in the booking system and forwarded via a dispatch system and relayed to a courier. The courier is assigned to the customer's pickup and/or delivery order via a proprietary handheld device or the courier is handed out a printed out paper sheet with the pickup and/or delivery details and routing details.

Dispatching the couriers in a flexible way means to provide a very efficient routing and a number of couriers for dispatching at peak times or in areas wherein many flexible pickup and/or delivery jobs have to be provided. For handling the logistical problem in an economic way, logistic companies normally offer courier pickup and/or delivery service within different time slot durations to the customer depending on the urgency of the delivery.

It is the object of the present invention to provide a flexible and efficient time scheduling for pickup and/or delivery of physical objects in communication with the customer.

The object is achieved by a method according to claim 1, a dispatch system according to claim 5. Embodiments of the method and the dispatch system are given in the dependent claims.

The embodiments of the present invention provide a method for exchanging a courier transport message by means of an electronic calendar information, comprising:
a first electronic calendar information including a participation status, indicating a work item and capable of updating the status of delivery as an electronic calendar information item compliant to a previously defined set of instructions as a standard; a second electronic calendar information with an additional qualification information additional to the previously defined set of instructions;
wherein an additional service is invoked in the case that a standard compliant programme of a customer allows processing standard compliant electronic calendar information.

The second electronic calendar information may be combined with an additional qualification information as the electronic calendar information item of definition additional to the previously defined set of instructions.

In a further embodiment the present invention provides a dispatch system for exchanging a courier transport message with an electronic calendar information mapping means, comprising:
Means for mapping a first electronic calendar information including a participation status, indicating a work item and capable of updating the status of delivery as an electronic calendar information item compliant to a previously defined set of instructions as a standard;
Means for mapping a second electronic calendar information with additional qualification information as the electronic calendar information item of definition additional to the previously defined set of instructions;
wherein an additional service is addressable in the case that an standard compliant programme of a customer allows processing standard compliant electronic calendar information.

The idea of the present invention is to provide an effective and flexible method for allowing pickup and/or delivery of physical mail object by using an open communication standard, and direct interaction with the customer, and the proprietary logistic system environment. The present invention allows the customer to use an iCalendar standard customer device. The mapping of logistic data between the proprietary system and an open iCalendar standard allows a combination of the advantages of open standard iCalendar devices for communication with the customer and the advantage of the proprietary system architecture on the logistic system side for dispatching and forwarding physical mail pieces. Further, the invention advantageously allows invoking plug-in programmes and/or document objects for application of further, non-standard compliant data, which are needed for logistic processing of physical mail pieces.

Advantageously, the present invention allows direct communication with the customer in the logistic processing, and the usage of open standard iCalendar data architecture for physical mail pieces forwarding and distribution.

In one embodiment the present invention allows that the additional service is an attached associated document object with the electronic calendar information component or a reference to an information. Advantageously, this allows to attach a document in the case additional data, which are not compliant with the iCalendar standard is needed for processing physical mail objects. Further, an attachment my be a reference to an information, i.e. a downloadable information or programme that may be used with the user device in order process non-standard additional information for the dispatching.

Advantageously the present invention allows that the additional service is a plug-in programme for processing the additional second electronic calendar information. Advantageously, the present invention allows using a plug-in programme, enabling the use of commercially available iCalendaring software for bespoke needs of physical mail processing. As example the second calendar information may be embellished as a standard property attachment (ATTACH) to provide additional information.

Advantageously the present invention allows that the additional service plug-in programme of document object is attached to the with the electronic calendar information by means of a parameter of an attach property. Advantageously, the present invention allows exploiting the iCalendar standard capabilities of attaching an object or a plug-in programme in order to allow the customer processing of non-standard compliant data in an easy and effective way.

The aforementioned and other aspects of the invention will also be apparent from and elucidated with reference to the embodiments described hereinafter making reference to the drawings.

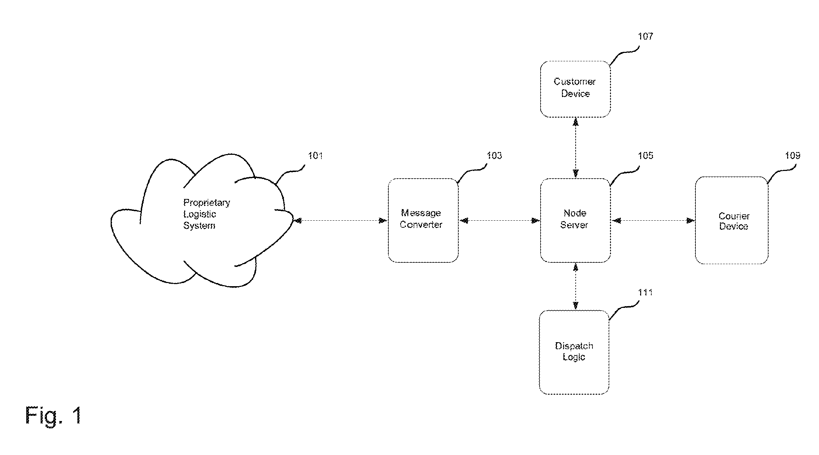

Reference will be made by way of example to the accompanying drawings in which Figure 1 shows an illustration of the implementation of the present invention.

The present invention allows using an open standard for all applications of courier service workflow, allowing the customer to use all features and additional features of the logistic service provider architecture on customer's hardware and software devices independently of the platform of operation system and resulting in a high flexibility for the both, the customer as well as the logistic company.

Nowadays calendar invitations are being exchanged over computer networks and the internet for inviting other persons to meetings, appointments or telephone calls, etc. An exchange of calendar event is normally established by filling out a form in a graphical user interface of a time planner or calendaring tool. When the calendar event has been generated, other persons can be requested to join the event, by exchanging the data in an adapted data format with all concerning properties via email. The person concerned may accept the appointment and confirm or reject the appointment, and send the changed property data back to the sender. The properties which are provided in an open calendar event exchange and processing standard are defined in the iCalendar standard. Although the iCalendar standard might be known, the implementation of iCalendar events for an effective courier workflow in a standard compliant way is achieved by the current invention.

In general the iCalendar standard provides the ability to communicate with the customer using the electronic calendar invitations to rearrange a pickup or delivery or physical mail objects in an inventive manner.

The iCalendar standard provides the ability to communicate with the customer using the calendar invitations to rearrange a pickup or delivery or physical mail objects in an inventive manner.

The present invention concerns formats for exchanging and storing of calendar events, in particular concerning the following standards of the Internet Engineering Task Force (IETF) in form of Request for Comments (RFC):
- RFC 2445 - Internet Calendaring and Scheduling Core Object Specification (iCalendar)
- RFC 2446 - iCalendar Transport-Independent Interoperability Protocol (iTIP)
- RFC 2247 - Message-Based Interoperability Protocol (iMIP) - e-mail based calendaring
- RFC 4791 - CalDav - http based calendaring
- Internet draft - CaIDAV Scheduling Extensions to WebDAV (CalDav-Sched)

The iCalendar standard regulates the data format for the exchange of meetings times, to-do entries, and other data among compliant applications. iCalendar data is typically exchanged using traditional email programs; some standards e.g. iCalendar and iTIP are designed to be independent of the particular transport protocol.

The iCalendar format is a data format defined by Request for Comments (RFC) 2445 of the Internet Engineering Task Force (IETF). An also known standard, which is compatible to the iCalendar Standard is the vCalendar standard, which is a preceding standard that was promulgated by the Internet Mail Consortium (IMC).

The customer device 107 according to the present invention is either a software for communication with the iCalendar standard or hardware device i.e. a computer or a mobile communication device, for example, a mobile telephone, a PDA or any device that is possibly used for complications especially with a computer network and/or the Internet.

The system according to the present invention comprises a node server 105, and several devices 103, 107, 109, 111. The node server 105 and devices 103, 107, 109, 111 interchange data in the iCalendar format. The plurality of devices comprise particularly at least one customer device 107, a dispatch logic device 111, a courier device 109, and a message converter 103 as an interface to the proprietary logistic system 101. The data format between the message converter 103 and the proprietary logistic system 101 may be different from the iCalendar standard.

Any message interchanged in iCalendar format comprises a plurality of properties. It is not necessary to interchange the entire set of properties every time. It is sufficient to exchange the actual changed properties.

A standard message is an iCalendar Event Reply/Request as defined per RFC 2446. The iCalendar Event Reply/Request comprises standard properties which are interpreted in the sense of a logistic workflow.

The open standard iCalendar information architecture providing the node server 105, and the customer device 107, dispatch logic device 111, the courier device 109, and the proprietary system architecture 101 is connected with a message converter 103. The message converter 103 comprises a mapping table for creating data elements mapping between the data models of the open Standard and the proprietary system and thus provides an interface for direct communication between the customer and the logistic system, in particular with a dispatcher or a courier using the proprietary system or the iCalendar standard system for logistic purposes.

An ATTENDEE property serves for specifying the courier routing and details about the delivery and delivery status. The ATTENDEE property provides several parameters amongst others PARSTAT, X-DHL-Comment and X-DHL-Reason. The X-DHL-Comment qualifies the chance of the delivery / customer in status. For example the status "on vacation" flags that the delivery is pending. The X-DHL-Reason qualifies a code for the delivery / customer in status, For example the status "not home" flags that the delivery / pickup is pending, but can be fulfilled later next day by another courier, and "no time" flags that the delivery / pickup is pending but can be fulfilled later that day.

Further there are two mechanisms of availability for additional information being attached. The first is by the use of X- codes, as mentioned before.

The flags may vary in their determination and further X- codes may be added. The X-Codes are a standard mechanism for adding properties and parameters not compliant to the open iCalendar standard. The additional non-standard data is being necessary for dispatching, delivery and / or pickup of the physical mail objects. In this case some bespoke software for example standard software plug-in for an e-mail programme may be required.

The second mechanism provides additional information which may be attached by a file with the "ATTACH" property. An attachment would be achieved with a document template added to the electronic iCalendar information. An example for standard document templates includes HTML- or XML- document templates.

By using a standard extension mechanism, it is possible to minimise the requirements for the bespoke software and therefore make it more efficient to integrate courier booking into the standard tools used by the customers.

As one consequence the present invention provides identification of couriers on duty and their e-mail addresses, instead of on the identifying the couriers by their routes.

The present invention may also be used for cases that are similar application, comprising dispatching of taxis, maintenance workers, civil and military logistic support and further.

Further the present invention solves the problem of providing a reason for status change, for example the change to the status "not home" which is not directly handled by an iCalendar standard and needs a provision in the mapping of data from a proprietary system tool in the open iCalendar standard.

The present invention may also be used for other scheduling purposes, e.g. scheduling a route planning for public transport purposes or of scheduling a work planning of a group of maintenance workers.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality. A single processor or other unit may fulfil the functions of several items recited in the claims.

### List of reference numerals:

- 101: Proprietary Logistic System
- 103: Message Converter
- 105: Node Server
- 107: Customer Device
- 109: Courier Device
- 111: Dispatch Logic Device

## Claims

1. Method for exchanging a courier transport message by means of an electronic calendar information, comprising:
a first electronic calendar information including a participation status, indicating a work item and capable of updating the status of delivery as an electronic calendar information item compliant to a previously defined set of instructions as a standard;
a second electronic calendar information with an additional qualification information additional to the previously defined set of instructions;
wherein an additional service is invoked in the case that a standard compliant programme of a customer allows processing standard compliant electronic calendar information.

2. Method according to claim 1, wherein the additional service is an attached associated document object with the electronic calendar information component or a reference to an information.

3. Method according to claim 1, wherein the additional service is a plug-in programme for processing the additional second electronic calendar information.

4. Method according to any of the claims 1 to 3, wherein the additional service plug-in programme of document object is attached to the electronic calendar information by means of a parameter of an attach property.

5. Dispatch system for exchanging a courier transport message with an electronic calendar information mapping means, comprising:
Means for mapping a first electronic calendar information including a participation status, indicating a work item and capable of updating a status of delivery as an electronic calendar information item compliant to a previously defined set of instructions as a standard;
Means for mapping a second electronic calendar information with additional qualification information as the electronic calendar information item additional to the previously defined set of instructions;
wherein an additional service is addressable in the case that an electronic standard compliant programme of a customer allows processing standard compliant electronic calendar information.

6. Dispatch system according to claim 5, wherein the additional service is an attachable associated document object with the electronic calendar information component or a reference to an information.

7. Dispatch system according to claim 5, wherein the additional service is a plug-in programme for processing additional second electronic calendar information.

8. Dispatch system according to any of the claims 5 to 8, wherein the additional service plug-in programme of document object is attachable to the electronic calendar information by means of a parameter of an attach property.
